# EUROPÄISCHE PATENTANMELDUNG

(11) **EP 1 043 107 A2**
(43) Veröffentlichungstag der Anmeldung: **11.10.2000**
(21) Anmeldenummer: 00107211.5
(22) Anmeldetag: 01.04.2000
(51) Int. Cl.: B23K 9/10

(54) **Vorrichtung zum Lichtbogenschweissen**

(30) Priorität: 07.04.1999 DE 19915518
(71) Anmelder: MESSER-EWM GmbH, 56271 Mündersbach (DE)
(72) Erfinder: Szczesny, Michael, 56235 Ransbach-Baumbach (DE)
(74) Vertreter: Cohausz & Florack

(57) **Zusammenfassung**

Die Erfindung betrifft eine Vorrichtung zum Lichtbogenschweißen bestehend aus mindestens zwei Lichtbogenschweißgeräten (1), insbesondere WIG- oder MIG/MAG-Schweißgeräten, oder mindestens einem Lichtbogenschweißgerät (1) und einer Peripherieeinheit (8,9,10), wie z.B. ein PC (8) oder eine Fernsteuereinheit (9) welche jeweils von einem gemeinsamen elektrischen Versorgungssystem (6) gespeist werden, wobei jedes Lichtbogenschweißgerät (1) ein Leistungsmodul (4) zur Ansteuerung des Schweißprozesses, eine Bedienungseinheit (3) und eine Steuerelektronik (2) aufweist. Die Weiterentwicklung der Vorrichtung besteht darin, daß jedes der mindestens zwei Lichtbogenschweißgeräte (1) bzw. das mindestens eine Lichtbogenschweißgerät (1) und die mindestens eine Peripherieeinheit (8,9,10) ein Kopplungsmittel (5) aufweisen zum Ein- bzw. Auskoppeln von Prozeßdaten und/oder von Steuerinformationen in das elektrische Versorgungssystem (6).

## Beschreibung

Die Erfindung betrifft eine Vorrichtung zum Lichtbogenschweißen bestehend aus mindestens zwei Lichtbogenschweißgeräten, insbesondere WIG- oder MIS/MAG-Schweißgeräten, oder mindestens einem Lichtbogenschweißgerät und einer Peripherieeinheit, wie z. B. ein PC oder eine Fernsteuereinheit welche jeweils von einem gemeinsamen elektrischen Versorgungssystem gespeist werden, wobei jedes Lichtbogenschweißgerät ein Leistungsmodul zur Ansteuerung des Schweißprozesses, eine Bedienungseinheit und eine Steuerelektronik aufweist.

Elektrische Lichtbogenschweißgeräte sind aus dem Stand der Technik bekannt (DE 38 03 447 und DE 38 04 387)

Beim Aufbau eines Systems bestehend aus mehreren Lichtbogenschweißgeräten, die beispielsweise mit einer Gruppe von Schweißrobotern arbeiten, erfolgt die Leistungsversorgung der Lichtbogenschweißgeräte in der Regel über ein gemeinsames elektrisches Versorgungsnetz. Wenn ein Austausch von Prozeßdaten oder von Steuerinformationen von einem Lichtbogenschweißgerät zum anderen erforderlich ist, erfolgt dies in der Praxis dadurch, daß hierzu separate Leitungen zwischen den zu verbindenden Lichtbogenschweißgeräten errichtet werden, über die eine Kopplung erfolgt. Ein Beispiel für eine solche Kopplung sind sogenannte Can-Bus-Steuerungssysteme, die aus der Praxis bekannt sind. Ein Nachteil solcher Systeme besteht darin, daß separate Steuerkabel zwischen den einzelnen Lichtbogenschweißgeräten erforderlich sind. Aus der EP 0 575 082 ist ein Lichtbogenschweißgerät bekannt, bei welchem der Austausch von Prozeßdaten zwischen der Schweißelektrode und dem Schweißgerät über die elektrische Versorgungsleitung zum Schweißprozeß erfolgt.

Der Erfindung liegt die Aufgabe zugrunde, eine Vorrichtung der eingangs genannten Art dahingehend weiterzuentwickeln, daß separate Steuerkabel für die Datenübertragung zwischen den Lichtbogenschweißgeräten bzw. einem Lichtbogenschweißgerät und einer Peripherieeinheit entfallen können.

Diese Aufgabe wird erfindungsgemäß dadurch gelöst, daß jedes der mindestens zwei Lichtbogenschweißgeräte bzw. das mindestens eine Lichtbogenschweißgerät und die mindestens eine Peripherieeinheit ein Kopplungsmittel aufweisen zum Ein- bzw. Auskoppeln von Prozeßdaten und/oder von Steuerinformationen in das elektrische Versorgungssystem.

Die Erfindung zeichnet sich dadurch aus, daß zwischen verschiedenen Schweißmaschinen bzw. Peripherieeinheiten Informationen in Form von Daten ausgetauscht werden können, ohne daß zusätzliche Verbindungskabel erforderlich sind. Das ohnehin vorhandene Versorgungssystem dient neben seiner ursprünglichen Aufgabe der zur Verfügungstellung der entsprechenden Leistung auch als Träger für ein Datennetzwerk, in dem der vorhandenen Netzspannung die entsprechenden Prozeßdaten und/oder Steuerinformationen nach bekannten Verfahren aufmoduliert bzw. von diesen demoduliert werden. Damit ist es möglich, schweißrelevante Daten, wie z.B. Schweißstrom, Schweißspannung oder Drahtvorschubgeschwindigkeit zwischen den einzelnen Lichtbogenschweißgeräten bzw. Peripheriegeräten ohne zusätzliche Kabel zu übertragen.
Das so gebildete Datennetzwerk zwischen den einzelnen Schweißgeräten und den Peripheriegeräten ermöglicht, daß der Datenaustausch auch bei großer räumlicher Entfernung erfolgen kann. Durch den Aufbau eines solchen Netzwerkes können die Daten bei einem beispielsweise als PC gestalteten Peripheriegerät von diesem überwacht oder archiviert werden. Eine denkbare Variante sieht auch vor, daß über eine entsprechende graphische Darstellung die Schweißprozeßdaten dem Anwender auf einer Anzeige sichtbar gemacht werden können.

Wenn in einer weiteren bevorzugten Ausführungsform vorgesehen ist, daß das Kopplungsmittel ein Hochfrequenzmodem ist, welches einen Hochfrequenzsender und einen Hochfrequenzempfänger jeweils aufweist, derart, daß den Prozeßdaten entsprechende Signale auf die speisende Netzspannung aufmodulierbar bzw. von dieser demodulierbar ist, ist es möglich, daß über die Hard- und Software-Adressierung Schweißdaten von einem PC von mehreren Schweißenergiequellen oder Periphiergeräten empfangen werden können.

Andererseits können auch die von einem Anwender erstellten Schweißprozeßparameter vom PC aus zu mehreren Schweißquellen oder Peripheriegeräten gesendet werden. Damit kann beispielsweise die Schweißaufsicht einer Werkhalle mit nur einem PC sämtliche Schweißstromquellen dieser Halle programmieren, ohne mehr als die Netzleitung zu benötigen.

Von einer Mastersteuerung, z.B. der Steuerelektronik einer Masterstromquelle oder von einer Fernsteuereinheit, können über die Netzleitung Befehle und Daten zwischen verschiedenen Schweißstromquellen und/oder Peripheriegeräten ausgetauscht werden.
Weitere bevorzugte Ausführungsformen gehen aus den weiteren Unteransprüchen hervor.

Die Erfindung wird im folgenden anhand einer Zeichnung näher erläutert.

Dabei zeigen:
- Fig. 1: eine erfindungsgemäße Vorrichtung zum Lichtbogenschweißen bestehend aus zwei über eine Netzspannungsversorgung gekoppelte Lichtbogenschweißgeräten;
- Fig. 2: das System nach Fig. 1 erweitert um Peripherieeinheiten;
- Fig. 3: eine Detaildarstellung der Steuerelektronik und des Kopplungsmittels eines Lichtbogenschweißgerätes
- Fig. 4: die Darstellung eines Datenprotokolls zur Verwendung in einem System nach einer der Figuren 1 bis 3.

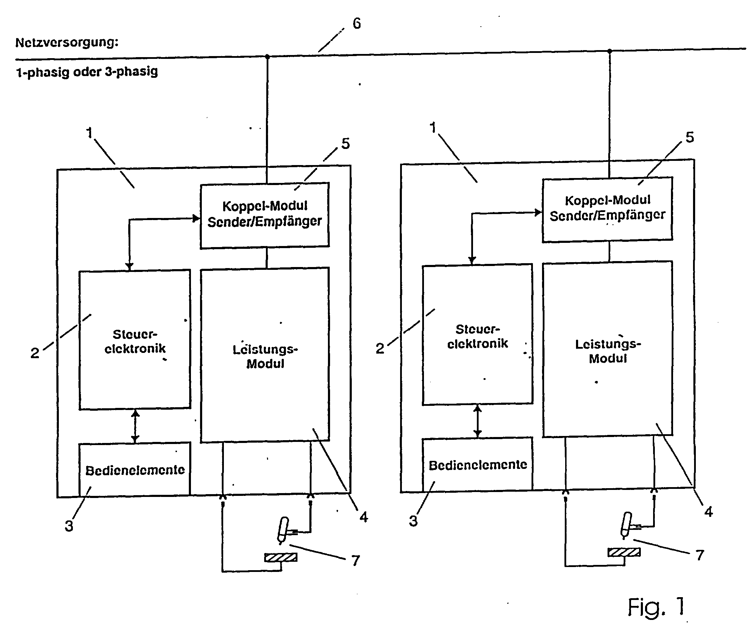

Bezugnehmend auf Fig. 1 sind zwei Lichtbogenschweißgeräte (Schweißstromquellen 1) dargestellt, die von einem gemeinsamen Versorgungsnetz 6 versorgt werden. Dieses Versorgungsnetz kann entweder das 3-phasige oder das 1-phasige Versorgungsnetz sein, oder aber eine Hilfsnetzversorgung mit einer Spannung von beispielsweise 42V.

Jede der Schweißstromquellen 1 weist eine Steuerelektronik 2 auf, sowie Bedienelemente 3 und ein Leistungsmodul 4 zur Leistungsversorgung des Schweißprozesses 7.

Leistungsmodul 4 und Steuerelektronik 2 sind jeweils mit einem Koppelmodul 5 verbunden, welches in Verbindung steht mit der Netzspannungsversorgung 6.

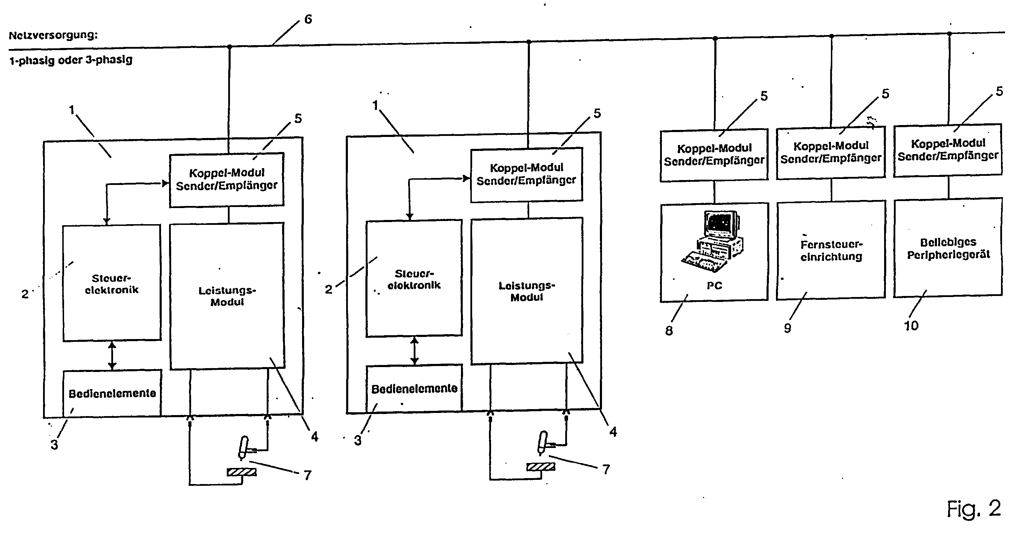

Wie aus Fig. 2 hervorgeht, liegen parallel zu den beschriebenen Schweißenergiequellen am gemeinsamen Versorgungsnetz 6 über weitere Koppelmodule 5 angekoppelte Peripherieeinheiten 8,9,10. Eine dieser Peripherieeinheiten ist ein Benutzer-PC 8. Eine andere Peripherieeinheit wird durch eine Fernsteuereinrichtung 9 gebildet oder durch ein anderes beliebiges Peripheriegerät 10.

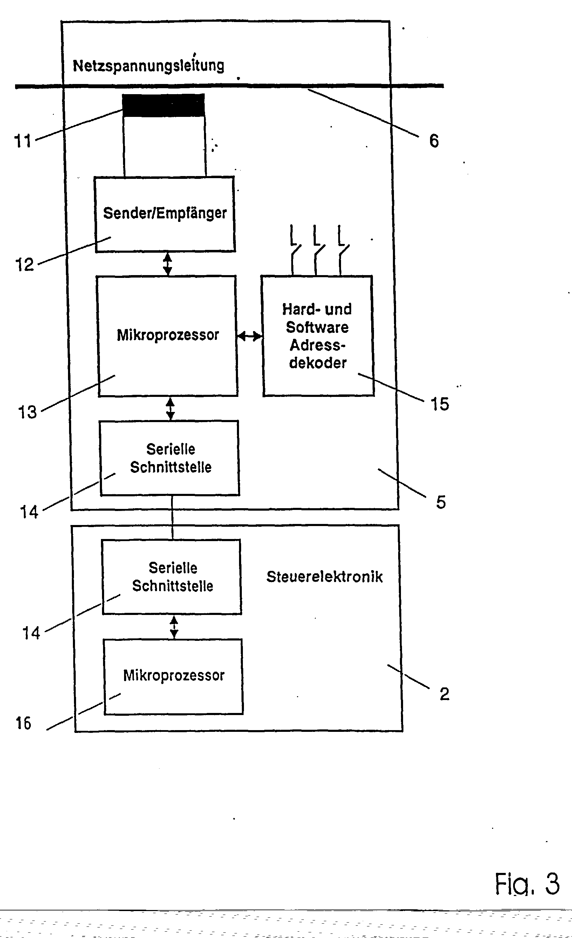

Fig. 3 zeigt eine Detaildarstellung des Koppelmoduls 5:

Die Verbindung zwischen dem Koppelmodul 5 und der Steuerelektronik 2 erfolgt über eine serielle Schnittstelle 14, welche sowohl in dem Koppelmodul als auch in der Steuerelektronik 2 von Mikroprozessoren 13, 16 gesteuert ist. Dem Mikroprozessor 13 ist ein Hard- und Software-Adressdekoder 15 zugeordnet, über den dem Koppelmodul 5 eine bestimmte Hard- und Software-Adresse zugewiesen wird.

Die vom Mikroprozessor 13 ausgegebenen Daten, dies sind in erster Linie Prozeßdaten aber auch Steuerbefehle, werden über eine Sender- und Empfängereinheit 12 auf dem Wege einer induktiven oder kapazitiven Ankopplung 11 auf die Netzspannungsleitung 6 übertragen.

Die Datenübertragung erfolgt dabei auf dem Wege einer Hochfrequenzmodulation auf die Netzspannungsfrequenz, wobei die Hochfrequenzmodulation vorzugsweise bei Frequenzen größer als 50kHz arbeitet.

Durch die beschriebene Einheit wird ein Datennetzwerk zwischen den verschiedenen Schweißgeräten und den Peripheriegeräten auf einfache Art und Weise aufgebaut. Der Datenaustausch zwischen den Schweißgeräten und/oder Peripheriegeräten erfolgt dabei ohne das Erfordernis einer zusätzlichen Leitung ausschließlich über die bestehende Netzspannungsversorgungsleitung.

Eine erste praktische Anwendung der Erfindung besteht darin, daß beim gleichzeitigen WIG-Schweißen mit Wechselstrom zwei Schweißstromquellen 1 über zwei Schweißbrenner 7 auf ein gemeinsames Werkstück arbeiten. Wenn die Schweißströme hinsichtlich ihrer Wechselstromfrequenz, Polarität, Wechselstrombalance und Schweißstromhöhe nicht miteinander synchronisiert werden, beeinflussen sich die beiden Lichtbögen der Schweißstromquellen ungünstig. Dies kann vermieden werden, wenn gemäß der Erfindung ein Datenaustausch zwischen den beiden Schweißstromquellen 1 erfolgt, wobei dies ohne zusätzliche Datenübertragungskabel und unabhängig von der räumlichen Entfernung der beiden Schweißstromquellen zueinander geschehen kann.

Ein zweiter Anwendungsfall ist darin zu sehen, daß zwei Stromquellen 1 über zwei Schweißdrähte in einem Schweißbrenner auf ein Werkstück arbeiten (MIG-MAG-Doppeldrahtschweißen). Auch in diesem Fall können beide Stromquellen erfindungsgemäß über die gemeinsame Netzstromversorgung miteinander synchronisiert werden. Besondere Bedeutung ist der übergeordneten Steuerung durch eine Periphiereinheit, beispielsweise einen PC zuzumessen:

Durch den Datenaustausch zwischen dem über eine serielle Schnittstelle mit einem Koppelmodul mit der Netzspannungsversorgung 6 verbundenen PC 8 ist es möglich, schweißrelevante Daten, wie z.B. Schweißstrom, Schweißspannung und Drahtvorschubgeschwindigkeit von der Stromquelle 1 auch über weite Entfernungen an den PC 8 zu übertragen.

Dadurch, daß jeder Einheit über den Adressendekoder 15 eine separate Hard- bzw. Software-Adresse zugewiesen wird, läßt sich ein System aufbauen, bei welchem Befehle und Prozeßdaten zwischen verschiedenen Schweißstromquellen 1 und/oder Peripherie wahlweise ausgetauscht werden können, beispielsweise in Form einer Mastersteuerung.

Andererseits können auch die von einem Anwender erstellten Schweißprozeßparameter vom PC 8 aus zu mehreren Schweißstromquellen 1 oder Peripheriegeräten 8,9,10 gesendet werden.

## Patentansprüche

1. Vorrichtung zum Lichtbogenschweißen bestehend aus mindestens zwei Lichtbogenschweißgeräten, insbesondere WIG- oder MIG/MAG-Schweißgeräten, oder mindestens einem Lichtbogenschweißgerät und einer Peripherieeinheit, wie z. B. ein PC oder eine Fernsteuereinheit, welche jeweils von einem gemeinsamen elektrischen Versorgungssystem gespeist werden, wobei jedes Lichtbogenschweißgerät ein Leistungsmodul zur Ansteuerung des Schweißprozesses, eine Bedienungseinheit und eine Steuerelektronik aufweist, **dadurch gekennzeichnet,** daß jedes der mindestens zwei Lichtbogenschweißgeräte bzw. das mindestens eine Lichtbogenschweißgerät und die mindestens eine Peripherieeinheit ein Kopplungsmittel aufweisen zum Ein- bzw. Auskoppeln von Prozeßdaten und/oder Steuerinformationen in das elektrische Versorgungssystem.

2. Vorrichtung zum Lichtbogenschweißen nach Anspruch 1, **dadurch gekennzeichnet,** daß das elektrische Versorgungssystem eine insbesondere 3-phasige Netzstromversorgung ist.

3. Vorrichtung zum Lichtbogenschweißen nach Anspruch 1, **dadurch gekennzeichnet,** daß das elektrische Versorgungssystem eine Hilfsstromversorgung mit einer Spannung von z.B. 42 V ist.

4. Vorrichtung zum Lichtbogenschweißen nach Anspruch 1 oder 2,
**dadurch gekennzeichnet,** daß das Kopplungsmittel ein Hochfrequenzmodem ist, welches einen Hochfrequenzsender und einen Hochfrequenzempfänger jeweils aufweist, derart, daß den Prozeßdaten und/oder den Steuerinformationen entsprechende Signale auf die speisende Netzspannung aufmodulierbar bzw. von dieser demodulierbar ist.

5. Vorrichtung zum Lichtbogenschweißen nach Anspruch 4, **dadurch gekennzeichnet,** daß die Modulationsfrequenz größer ist als 50kHz.

6. Vorrichtung zum Lichtbogenschweißen nach Anspruch 5, **dadurch gekennzeichnet,** daß das Kopplungsmittel einen Adressdekoder aufweist, derart, daß verschiedenen Koppelmodulen Hard- und/ oder Software-Adressen derart zuordnenbar sind, daß beliebige Datentelegaramme zu einem über eine Adresse ausgewählten Peripheriegerät gesendet werden oder von einem ausgewählten Peripheriegerät empfangen werden können.

7. Vorrichtung zum Lichtbogenschweißen nach einem der vorhergehenden Ansprüche, **dadurch gekennzeichnet,** daß die Ankopplung durch das Kopplungsmittel induktiv oder kapazitiv erfolgt.

8. Vorrichtung zum Lichtbogenschweißen nach einem der vorhergehenden Ansprüche,
**dadurch gekennzeichnet,** daß das mindestens eine Kopplungsmittel über eine Schnittstelle, insbesondere eine serielle Schnittstelle, jeweils mit der Steuerelektronik des Lichtbogenschweißgerätes und/oder der Peripherieeinheit verbunden ist.

9. Vorrichtung zum Lichtbogenschweißen nach einem der vorhergehenden Ansprüche,
**dadurch gekennzeichnet,** daß mehrere Peripheriegeräte in einem gemeinsamen Gehäuse untergebracht sind.

10. Vorrichtung zum Lichtbogenschweißen nach einem der vorhergehenden Ansprüche,
**dadurch gekennzeichnet,** daß mehrere Peripheriegeräte im Gehäuse des mindestens einen Lichtbogenschweißgerätes untergebracht sind.

11. Vorrichtung zum Lichtbogenschweißen nach einem der vorhergehenden Ansprüche,
**dadurch gekennzeichnet,** daß bei einer 3-phasigen Netzstromversorgung die verschiedenen Phasen durch induktive und/oder kapazitive Elemente derart verbunden sind, daß der Austausch von Datentelegrammen über die Koppelmodule zwischen verschiedenen Phasen des Netzes erfolgt.
